# EUROPEAN PATENT SPECIFICATION

(11) **EP 2 944 364 B1**
(45) Date of publication and mention of the grant of the patent: **03.01.2018**
(21) Application number: 14192865.5
(22) Date of filing: 12.11.2014
(51) Int. Cl.: B01D 17/02, B04C 5/04, B04C 5/081, F25B 43/02

(54) **OIL SEPARATOR AND AIR CONDITIONER HAVING THE SAME**
ÖLABSCHEIDER UND KLIMAANLAGE DAMIT
SÉPARATEUR D'HUILE ET CLIMATISEUR DOTÉ DE CELUI-CI

(30) Priority: 14.05.2014 KR 20140057799; 14.05.2014 KR 20140057798
(43) Date of publication of application: 18.11.2015
(73) Proprietor: LG Electronics Inc., Seoul 150-721 (KR)
(72) Inventor: Jeon, Boohwan, 153-802 Seoul (KR)
(74) Representative: Vossius & Partner Patentanwälte Rechtsanwälte mbB

(56) References cited:
- GB-A- 816 400
- GB-A- 2 342 602
- US-A- 2 288 245
- US-A- 2 911 059
- US-A- 3 304 697
- US-A- 4 038 051
- US-A- 4 555 253
- US-A- 5 071 556
- US-A1- 2006 280 622
- US-A1- 2009 071 188

## Description

An oil separator and an air conditioner having the same are disclosed herein.

Air conditioners are apparatuses for cooling or heating an indoor space using a refrigeration cycle including a compressor, an outdoor heat exchanger, an expansion device, and an indoor heat exchanger. That is, an air conditioner may include a cooler for cooling the indoor space and a heater for heating the indoor space. Also, the air conditioner may be a two-way air conditioner for cooling and heating the indoor space.

The compressor is a device for compressing a refrigerant. A large amount of oil may be introduced into the compressor to prevent components from being worn due to friction, cool portions that generate heat during a compressing process, reduce fatigue of metal components, and form an oil film on a sealing line so as to prevent compressed refrigerant from leaking. Refrigerant may be mixed with the oil introduced into the compressor while being compressed in the compressor, and then, the mixed refrigerant and oil may be discharged together. When the refrigerant flows in a state in which the refrigerant is mixed with the oil, the refrigerant may collect at a side of a passage disrupting flow of the refrigerant, and also, the oil may be reduced in quantity, deteriorating performance of the compressor.

Therefore, the air conditioner may include an oil separator to separate the oil mixed with the refrigerant discharged from the compressor from the refrigerant to be returned to the compressor. Such an oil separator is disclosed in Korean Patent Publication No. 1999-0071734. Another oil separator for an air conditioner is disclosed in US2006/0280622.

The oil separator disclosed in the '734 Publication is connected to or at a discharge side of the compressor to separate the oil contained in the refrigerant from the refrigerant to allow the separated oil to be collected in the compressor. The oil separator is required to effectively separate the oil from the refrigerant, and thus, it is necessary to find a more effective way to separate the oil from the refrigerant.

An object of the present invention is to provide an oil separator, which solves the above problem of the prior art.

The object of the present invention is achieved by the features defined in the independent claim. Preferred embodiments are defined in the dependent claims.

Embodiments will be described in detail with reference to the following drawings in which like reference numerals refer to like elements, and wherein:
Fig. 1 is a schematic diagram of an air conditioner according to an embodiment;
Fig. 2 is a perspective view of an oil separator of the air conditioner of Fig. 1;
Fig. 3 is a cross-sectional view of the oil separator of Fig. 2, taken along line III-III of Fig. 2;
Fig. 4 is a graph illustrating a flow rate of a refrigerant introduced from a suction tube in the oil separator of Fig. 2 according to a size of an inner diameter of a casing;
Fig. 5 is a graph illustrating oil separation efficiency of the oil separator of Fig. 2 according to the size of the inner diameter of the casing;
Fig. 6 is a graph illustrating pressure difference in the oil separator of Fig. 2 according to the size of the inner diameter of the casing;
Fig. 7 is a graph illustrating oil separation efficiency of the oil separator of Fig. 2 according to a height of the casing;
Fig. 8 is a graph illustrating pressure difference in the oil separator of Fig. 2 according to the height of the casing;
Fig. 9 is another cross-sectional view of the oil separator of Fig. 2, taken along line III-III of Fig. 2;
Fig. 10 is a schematic diagram illustrating an end of the suction tube disposed at various angles in the oil separator of Fig. 2;
Fig. 11 is a graph illustrating oil separation efficiency where a first end of the suction tube is disposed at various angles; and
Fig. 12 is a graph illustrating pressure difference where the first end of the suction tube is disposed at various angles.

In the following detailed description of embodiments, reference is made to the accompanying drawings that form a part hereof, and in which is shown by way of illustration specific embodiments. These embodiments are described in sufficient detail to enable those skilled in the art to practice the embodiments, and it is understood that other embodiments may be utilized and that logical structural, mechanical, electrical, and chemical changes may be made without departing from the scope. To avoid detail not necessary to enable those skilled in the art to practice the embodiments, the description may omit certain information known to those skilled in the art. The following detailed description is, therefore, not to be taken in a limiting sense, and the scope is defined only by the appended claims.

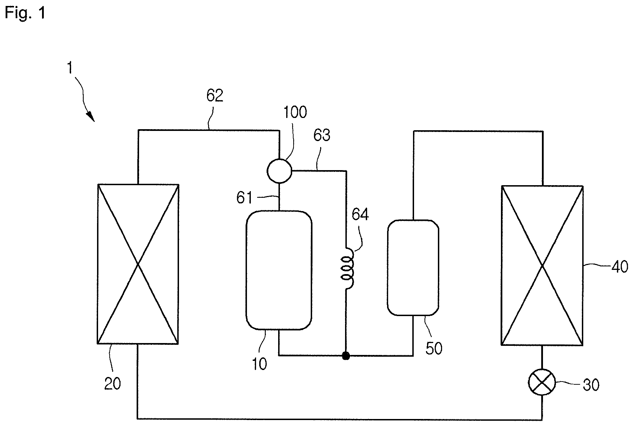

Fig. 1 is a schematic diagram of an air conditioner according to an embodiment. Referring to Fig. 1, an air conditioner 1 according to embodiments may include a compressor 10, a condenser 20, an expansion device 30, an evaporator 40, a gas/liquid separator 50, and an oil separator 100. The compressor 10 may compress a refrigerant. As compressors are well-known, detailed description thereof has been omitted.

In the condenser 20, the compressed refrigerant may be heat-exchanged with air, and condensed. The condenser 20 may correspond to an outdoor heat exchanger disposed in an outdoor space when the air conditioner is operated as a cooler, and the condenser 20 may correspond to an indoor heat exchanger disposed in an indoor space when the air conditioner is operated as a heater. As condensers are well-known, detailed description thereof has been omitted.

The expansion device 30 may expand the condensed refrigerant. As expansion devices are well-known, detailed description thereof has been omitted.

In the evaporator 40, the expanded refrigerant may be heat-exchanged with air, and evaporated. The evaporator 40 may correspond to an indoor heat exchanger disposed in an indoor space when the air conditioner is operated as the cooler, and the evaporator 20 may correspond to an outdoor heat exchanger disposed in an outdoor space when the air conditioner is operated as the heater. As the evaporators are well-known, detailed description thereof has been omitted.

The liquid/gas separator 50 may be disposed between the compressor 10 and the evaporator 40 to separate gaseous refrigerant from liquid refrigerant. As gas/liquid separators are well-known, detailed description thereof has been omitted.

The oil separator 100 may be disposed between the compressor 10 and the condenser 20 to separate the oil mixed with the compressed refrigerant from the refrigerant to allow the separated oil to be collected in the compressor 10. The oil separator 100 may be connected to the compressor 10 through a connection tube 61 to receive the refrigerant, in which the oil discharged from the compressor 10 may be mixed, therein so that the refrigerant mixed with the oil may flow therethrough. The oil separator 100 may be connected to the condenser 20 through a liquid tube 62 to supply the refrigerant, from which the oil is separated in the oil separator 100, into the condenser 20. The oil separated in the oil separator 100 may flow through an oil collection tube 63 and may be collected into the compressor 10 via a capillary tube 64.

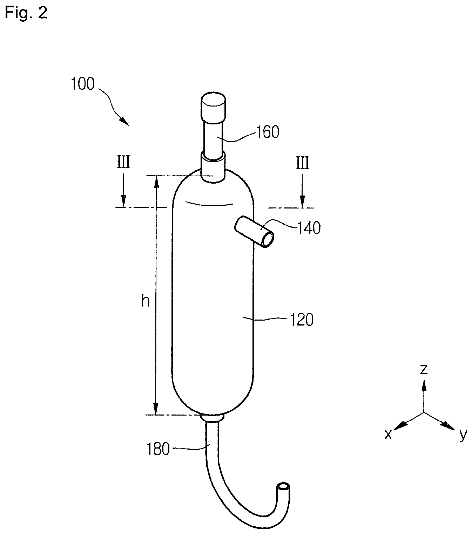

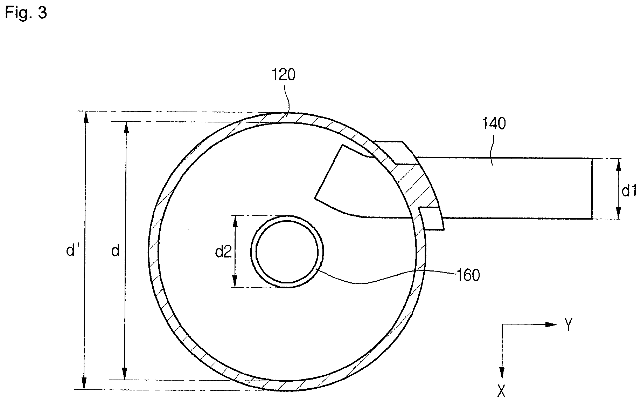

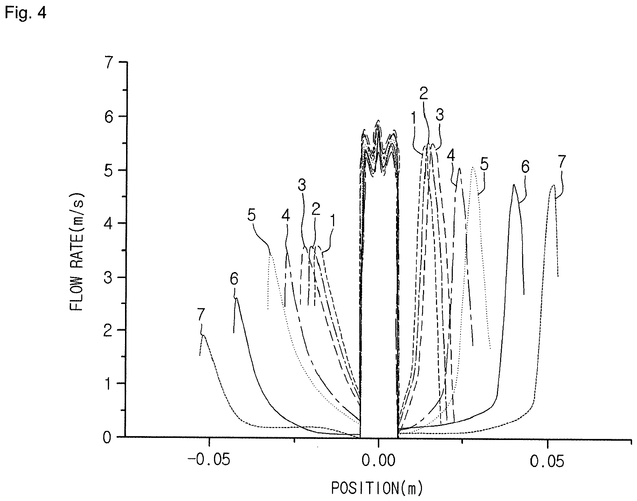

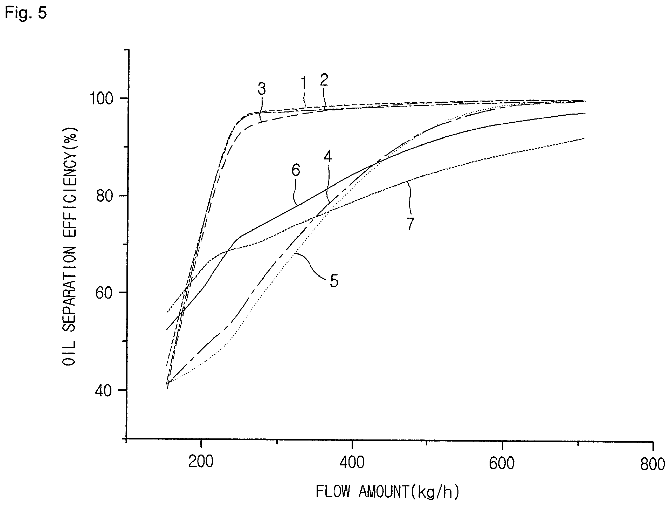

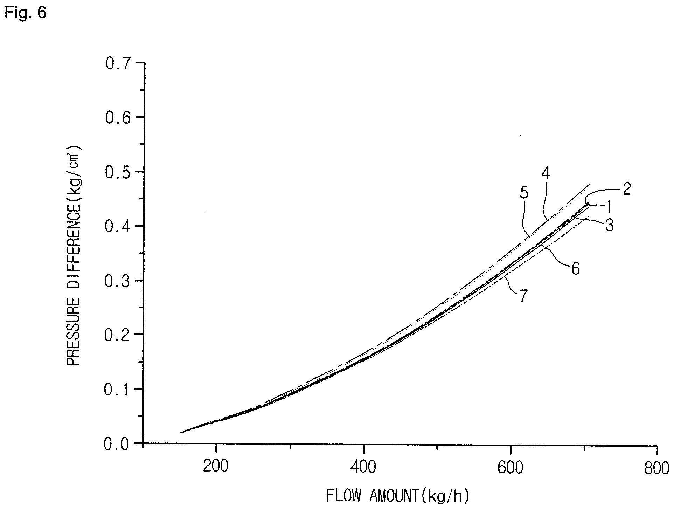

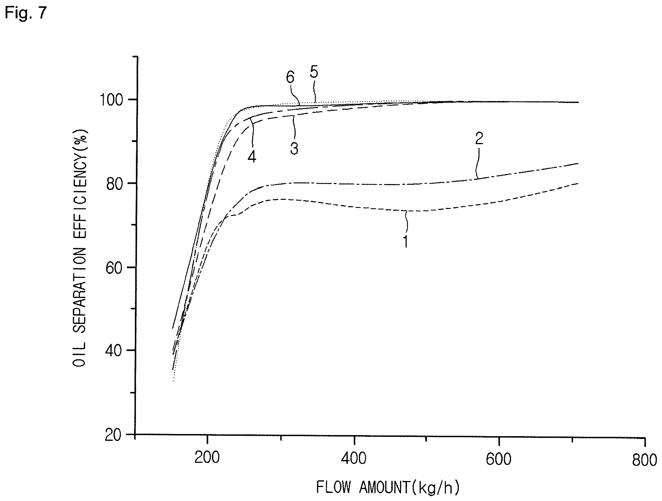

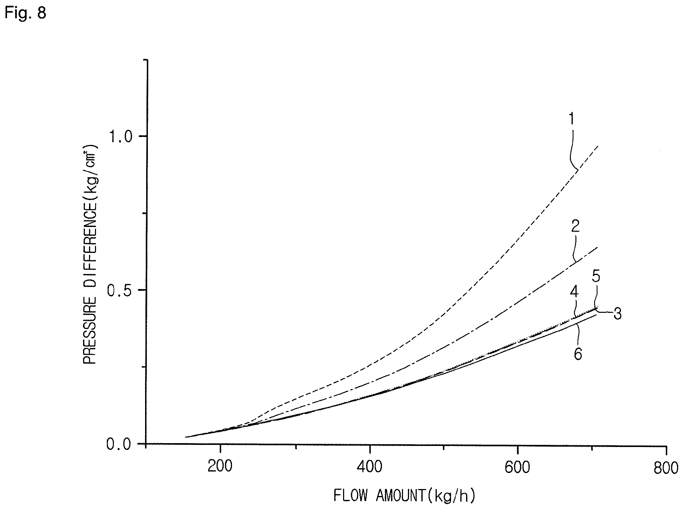

Fig. 2 is a perspective view of an oil separator of the air conditioner of Fig. 1. Fig. 3 is a cross-sectional view of the oil separator of Fig. 2, taken along line III-III of Fig. 2. Fig. 4 is a graph illustrating a flow rate of a refrigerant introduced from a suction tube in the oil separator of Fig. 2 according to a size of an inner diameter of a casing. Fig. 5 is a graph illustrating oil separation efficiency of the oil separator of Fig. 2 according to the size of the inner diameter of the casing. Fig. 6 is a graph illustrating pressure difference in the oil separator of Fig. 2 according to the size of the inner diameter of the casing. Fig. 7 is a graph illustrating oil separation efficiency of the oil separator of Fig. 2 according to a height of the casing. Fig. 8 is a graph illustrating pressure difference in the oil separator of Fig. 2 according to the height of the casing.

Referring to Figs. 2 and 3, the oil separator 100 may include a casing 120, a suction tube 140, a refrigerant discharge tube 160, and an oil discharge tube 180. The casing 120 may have a cylindrical shape having a circular cross-section in a horizontal direction and a sealed accommodation space. The casing 120 may have a side surface, to which the suction tube 140 may be connected. The casing 120 may have an upper portion, to which the refrigerant discharge tube 160 may be connected, and a lower portion, to which the oil discharge tube 180 may be connected.

The casing 120 may be supported by a support member (not shown) of an outdoor unit or device (not shown). The support member may be coupled to a bottom surface of the outdoor unit (not shown) including the compressor 10 (see Fig. 1).

The casing 120 may be designed with a small size to improve oil separation efficiency. The oil separation efficiency may be affected by factors, such as a flow rate of the refrigerant in the casing 120, a size of the casing 120, and a pressure difference in the casing 120, for example.

In detail, the more the flow rate of the refrigerant discharged from the suction tube 140 into the casing 120 increases, the more the oil separation efficiency increases. Also, the more a diameter of the casing 120 is decreased, the more the flow rate of the refrigerant in the casing 120 increases. The more the diameter of the casing 120 is decreased, the more the oil separation efficiency increases. Also, the more the diameter of the casing 120 is increased, the more the pressure difference, that is, the pressure loss decreases. The casing 120 may be designed with a small size in consideration of the flow rate of the refrigerant, oil separation efficiency, and pressure difference in the casing 120.

Figs. 4 to 6 illustrate flow rate of the refrigerant, oil separation efficiency, and pressure difference according to a size of an inner diameter d of the casing 120 shown in Table 1 below.

**[Table 1]**

| Casing | Inner diameter(mm) |
|---|---|
| 1 | 38.1 |
| 2 | 42.1 |
| 3 | 46.8 |
| 4 | 56 |
| 5 | 66 |
| 6 | 86 |
| 7 | 106 |

Referring to Fig. 4, the flow rate of the refrigerant according to the size of the inner diameter d of the casing 120 is not large in deviation. However, the more the inner diameter d of the casing 120 is decreased in size, the more the flow rate of the refrigerant increases at a position which is away from a center of the casing 120 toward an inner sidewall.

Referring to Fig. 5, it is seen that, when the casing 120 has an inner diameter d of about 38.1 mm to about 46.8 mm, the casing 120 significantly increases in oil separation efficiency when compared to a case in which the casing 120 has an inner diameter greater than a d of about 38.1 mm to about 46.8 mm. Referring to Fig. 6, it is seen that, when the casing 120 has the inner diameter d of about 38.1 mm to about 46.8 mm, the pressure loss in the casing 120 is not greatly different from a case in which the casing 120 has an inner diameter greater than a d of about 38.1 mm to about 46.8 mm.

As described above, the casing 120 may be designed to have the inner diameter d of about 38.1 mm to about 46.8 mm in cross-section in the horizontal direction in consideration of the relationship between the flow rate of the refrigerant introduced from the suction tube 140, the oil separation efficiency, and the pressure difference. The inner diameter d of the casing 120 may be designed with a smaller size to improve oil separation efficiency. However, the casing 120 should have the inner diameter d of 38.1 mm or more in consideration of minimal outer diameters d1 and d2 of the suction tube 140 and the refrigerant discharge tube 160. As the suction tube 140 and the refrigerant discharge tube 160 pass though the casing 120 and are inserted into and installed on the casing 120, the casing 120 may be designed to have the diameter d of about 46.8 mm in consideration of a work tolerance.

The casing 120 may be designed to have a thickness of about 2 mm. Thus, the casing 120 may have an outer diameter d' of about 42.1 mm to about 50.8 mm. The casing 120 may vary in thickness according to its design. The casing 120 may be designed to have a height of about 150 mm to about 180 mm.

Figs. 7 to 8 are graphs illustrating oil separation efficiency and pressure difference according to a height h of the casing 120 shown in Table 2 below.

**[Table 2]**

| Casing | Height(mm) |
|---|---|
| 1 | 100 |
| 2 | 120 |
| 3 | 150 |
| 4 | 180 |
| 5 | 200 |
| 6 | 250 |

Referring to Figs. 7 and 8, it is seen that, when the casing 120 has a height of about 150 mm to about 180 mm, the casing 120 may have excellent oil separation efficiency and low pressure difference. The casing 120 may be designed to have the height h of about 150 mm so that the casing 120 is miniaturized or reduced in size.

Due to the miniaturization of the casing 120 in design, the casing 120 may decrease in volume by about 75% in comparison to the prior art casing (the prior art casing has an inner diameter of about 86 mm) and increase in oil separation efficiency by about 20% in comparison to the prior art casing. The casing may significantly be increased in oil separation efficiency by reducing the size of the casing.

The suction tube 140 may be inserted into and installed on the side surface of the casing 120 in the horizontal direction. The suction tube 140 may function as a passage through which the refrigerant containing the oil may be introduced into the casing 120. The suction tube 140 may be connected to the connection tube 61 (see Fig. 1) through which the refrigerant compressed in the compressor 10 (see Fig. 1) may flow. The suction tube 140 may be integrally formed with the connection tube 61. Alternatively, the suction tube 140 and the connection tube 61 may be separately formed and then connected to each other.

The suction tube 140 may be designed to have an outer diameter d1 of about 12.7 mm to about 15.88 mm. As described above, the more the outer diameter is decreased in size, the more the oil separation efficiency increases. However, pressure difference and noise may increase. Thus, the suction tube 140 may be designed to have the outer diameter d1 of at least about 12.7 mm.

The refrigerant discharge tube 160 may be vertically inserted into the upper portion of the casing 120. The refrigerant discharge tube 160 may be designed to have the outer diameter d2 of at least about 12.7 mm in the horizontal section in consideration of a diameter of a pipe at a rear end of the oil separator 100.

An end of the refrigerant discharge tube 160 to suction the refrigerant may be disposed below the suction tube 140. The refrigerant introduced from the suction tube 140 into the casing 120 may be rotated downward to flow spirally. When the oil is separated from the refrigerant, the refrigerant may be discharged outside of the casing 120 through the refrigerant discharge tube 160.

The oil discharge tube 180 may be connected to the lower portion of the casing 120, and the oil in the casing 120 may be discharged outside of the casing 120 through the oil discharge tube 180. The oil separated from the refrigerant may flow downward along an inner side surface of the casing 120, and then be collected on or at a bottom of the casing 120. The collected oil may be discharged outside of the casing 120 through the oil discharge tube 180.

The oil discharge tube 180 may be connected to the oil collection tube (see reference numeral 63 of Fig. 1). The oil discharge tube 180 may be integrally formed with the oil collection tube 63. Alternatively, the oil discharge tube 180 and the oil collection tube 63 may be separately formed and then connected to each other. The oil discharged from the oil discharge tube 180 may flow through the oil collection tube 63 and the capillary tube (see reference numeral 64 of Fig. 1). Then, the oil may be collected in the compressor (see reference numeral 10 of Fig. 1).

As described above, the oil separator 100 according to embodiments may be significantly increased in oil separation efficiency due to miniaturization of the casing 120, and thus, the oil separator 100 may be miniaturized.

Hereinafter, the suction tube 140 of the oil separator 100 according to embodiments will be described in detail.

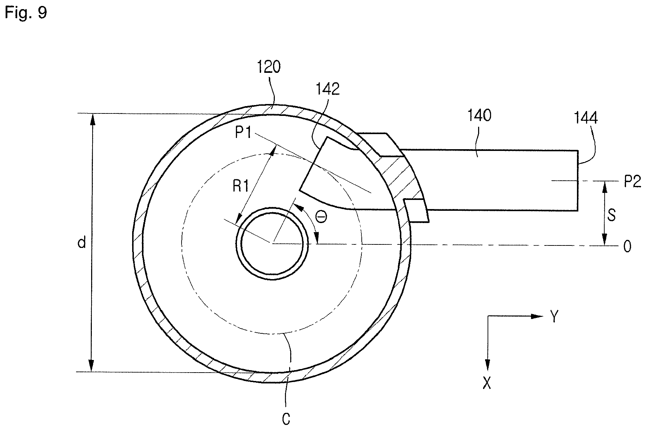

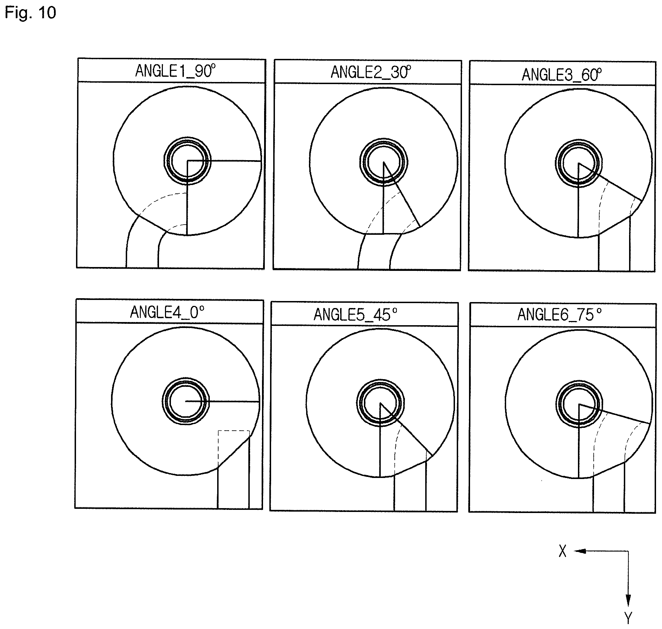

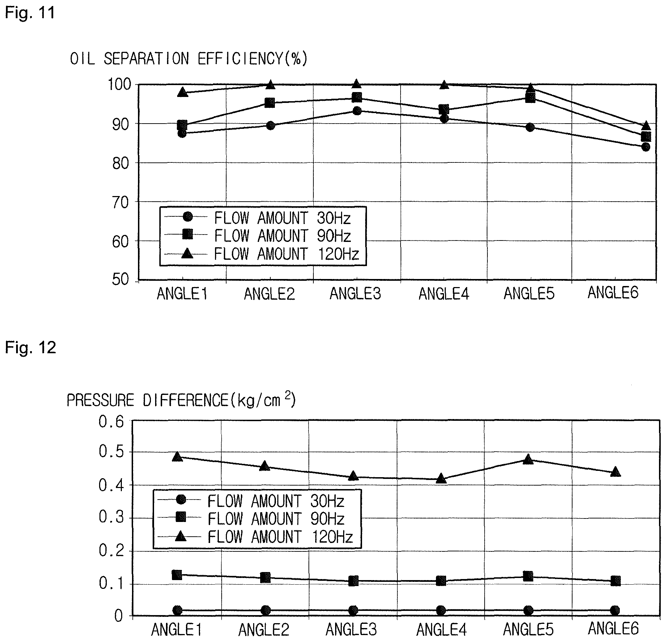

Fig. 9 is another cross-sectional view of the oil separator of Fig. 2, taken along line III-III of Fig. 2. Fig. 10 is a schematic diagram illustrating an end of the suction tube disposed at various angles in the oil separator of Fig. 2. Fig. 11 is a graph illustrating oil separation efficiency where a first end of the suction tube is disposed at various angles. Fig. 12 is a graph illustrating pressure difference where the first end of the suction tube is disposed at various angles.

Referring to Fig. 9, the suction tube 140 has a first end 142, through which the refrigerant containing the oil may be discharged into the casing 120, and a second end 144, through which the refrigerant containing the oil transferred from the compressor 10 may be guided to the first end 142 so as to discharge the refrigerant through the first end 142. When the suction tube 140 is inserted into and installed on the casing 120, the casing 120 may increase in oil separation efficiency according to an installation structure thereof. Referring to a relationship between the suction tube 140 and the oil separation efficiency, the oil separation efficiency may be proportional to a distance R1 from a center of the first end 142 of the suction 140 to a center of the casing 120 on the same horizontal plane.

Thus, it is necessary to secure a maximal distance R1 from the center of the first end 142 of the suction tube 140 to the center of the casing 120 on same horizontal plane so as to increase the oil separation efficiency. The first end 142 of the suction tube 140 may be bent at a predetermined angle in the horizontal plane to secure the maximal distance R1.

Fig. 10 to 12 illustrates oil separation efficiency and pressure difference according to bent angles of the first end 142 of the suction tube 140. Referring to Figs. 10 to 12, it is seen that, when the angle between the center of the casing 120 and the first end 142 of the suction tube 140 is about 60°, the oil separator 100 may have optimal oil separation efficiency and also a minimum pressure difference. Thus, the first end 142 of the suction tube 140 may be designed to be bent at about 60° along an inner side surface of the casing 120 in the horizontal direction. That is, an angle θ between the center of the casing 120 and the first end 142 of the suction tube 140 may be about 60°.

When considering the angle between the center of the casing 120 and the first end 142 of the suction tube 140, the outer diameter of the suction tube 140, and the inner diameter of the casing 120, the suction tube 140 may be designed so that the maximal distance R1 from the center of the first end 142 of the suction tube 140 to the center of the casing 120 on the same horizontal plane is about 16.2 mm. A central axis line P1 of the first end 142 of the suction tube 140 may be defined along a direction of a tangential line of a concentric circle C of the casing 120 having a radius of about 16.2 mm.

The suction tube 140 may be inserted into and installed on the casing 120 so that the suction tube 140 may be spaced a predetermined distance S from a line O passing through the center of the casing 120 and running in a Y-axis direction to secure the above-described maximal distance R1. That is, the suction tube 140 may be inserted into and installed on the casing 120 in a state in which a central axis line P2 of the second end 144 of the suction tube 140 in a longitudinal direction (Y-axis direction) of the suction tube 140 is spaced a predetermined distance S from the line O extending through the center of the casing 120 in parallel to a longitudinal direction of the suction tube 140 on the same horizontal plane. The predetermined distance S may range from about 10 mm to about 15 mm. Also, the predetermined distance S may be about 10.8 mm to secure the maximal distance R1 of about 16.2 mm.

As described above, the oil separator 100 according to embodiments may significantly increase in oil separation efficiency through the casing 120 having the inner diameter d of at least about 46.8 mm in the horizontal section, and the suction tube 140 inserted into and installed on the casing 120 according to the above-described angle and distance in the horizontal direction.

Hereinafter, an operation of the oil separator according to embodiments will be described.

When the refrigerant containing the oil is introduced into the casing 120 through the suction tube 140, the refrigerant may be rotated downward to flow spirally. The oil may contact an inner side surface of the casing 120 to flow downward due to a centrifugal force, and then, be discharged through the oil discharge tube 180. The refrigerant separated from the oil may be discharged through the refrigerant discharge tube 160. In this embodiment, when the oil separator is operated, the oil separator may significantly increase in oil separation efficiency through the foregoing casing 120 and the suction tube 140.

As described above, in the oil separator 100 and the air conditioner 1 having the oil separator 100 according to an embodiments, as the oil separation efficiency between the refrigerant and the oil may significantly increase, the refrigerant may be effectively separated from the oil. Also, in the oil separator 100 and the air conditioner including the same according to embodiments, the air conditioner 1 may be miniaturized or reduced in size due to the miniaturization, or reduction in size of the oil separator 100.

Embodiments disclosed herein provide an oil separator that is capable of effectively separating oil from a refrigerant and an air conditioner having the same.

Embodiments disclosed herein provide an oil separator that may include a casing having a cylindrical shape having a circular cross-section in a horizontal direction; a suction tube inserted into and installed on a side surface of the casing to introduce a refrigerant mixed with oil into the casing; a refrigerant discharge tube vertically inserted into and installed on an upper portion of the casing to discharge the refrigerant into the casing; and an oil discharge tube connected to a lower portion of the casing to discharge the oil into the casing. The casing may have an inner diameter of about 38.1 mm to about 46.8 mm in the horizontal cross-section. The casing may have the inner diameter of about 46.8 mm. The casing may have a height of about 150 mm to about 180 mm.

The suction tube may have an outer diameter of at least about 12.7 mm. The refrigerant discharge tube may have an outer diameter of at least about 12.7 mm. The suction tube may have one end that is bent at about 60° along an inner side surface of the casing in the horizontal direction.

The casing may have the inner diameter of about 46.8 mm in the horizontal section, and a central axis line of the other end of the suction tube in a longitudinal direction of the suction tube may be spaced by a distance of about 10 mm to about 15 mm from a central axis of the casing in parallel to the longitudinal direction of the suction tube on the same horizontal plane. The spaced distance may be about 10.8 mm.

A distance from a center of the casing to a center of the one end of the suction tube may be about 16.2 mm on the same horizontal plane. The central axis line of the one end of the suction tube may be defined in a direction of a tangential line of a concentric circle of the casing having a radius of about 16.2 mm.

Also, an air conditioner according to embodiments may include the oil separator according to embodiments.

The above-described embodiments provide an oil separator that is capable of effectively separating oil from a refrigerant and an air conditioner having the same.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. An oil separator (100) for separating oil from refrigerant discharged from a compressor of an air conditioner, comprising:
a casing (120) having a cylindrical shape having a circular cross-section in a horizontal plane;
a suction tube (140) inserted into and installed on a side surface of the casing to introduce a refrigerant mixed with oil into the casing;
a refrigerant discharge tube (160) vertically inserted into and installed on an upper portion of the casing to discharge the refrigerant from the casing; and
an oil discharge tube (180) connected to a lower portion of the casing to discharge the oil from the casing,
**characterized in that** an inner diameter of the casing (120) is 38.1 mm to 46.8 mm in the horizontal cross-section,
wherein a height of the casing (120) is 150 mm to 180 mm,
wherein the suction tube (140) has a first end (142) for discharging the refrigerant into the casing (120), the first end (142) being bent away from a center of the casing (120),
wherein, in the horizontal cross-section, a longitudinal axis of the suction tube (140) is at a predetermined distance (S) from the center of the casing (120), and
wherein the first end (142) is bent at an angle of about 30° with respect to the longitudinal axis (P2) of the suction tube (140) in the horizontal cross-section.

2. The oil separator according to claim 1, wherein the inner diameter of the casing (120) is about 46.8 mm in the horizontal cross-section.

3. The oil separator according to claim 1 or 2, wherein the height of the casing (120) is about 150 mm.

4. The oil separator according to any of preceding claims, wherein an outer diameter of the suction tube (140) is at least about 12.7 mm.

5. The oil separator according to claim 4, wherein the outer diameter of the suction tube (140) is 12.7 mm to 15.88 mm.

6. The oil separator according to any of preceding claims, wherein an outer diameter of the refrigerant discharge tube (160) is at least about 12.7 mm.

7. The oil separator according to claim 1, wherein the inner diameter of the casing is about 46.8 mm in the horizontal cross-section, and wherein the predetermined distance (S) between the longitudinal axis of the suction tube (140) and the center of the casing (120) is 10 mm to 15 mm.

8. The oil separator according to claim 7, wherein the predetermined distance (S) is about 10.8 mm.

9. The oil separator according to any of claims 1 to 8, wherein, in the horizontal cross-section, a distance (R1) from the center of the casing (120) to a center of the first end (142) of the suction tube (140) is about 16.2 mm.

10. The oil separator according to claim 9, wherein a longitudinal axis of the bent part of the suction tube (140), passing through the center of the first end (142), is tangential to a circle concentric with the casing (120), having a radius of about 16.2 mm.

11. An air conditioner comprising the oil separator according to any of preceding claims.

12. The air conditioner according to claim 11, further comprising:
a compressor (10) configured to compress the refrigerant;
a condenser (20) configured to receive the compressed refrigerant from the compressor and condense the compressed refrigerant;
an expansion device (30) configured to receive the condensed refrigerant from the condenser and expand the condensed refrigerant; and
an evaporator (40) configured to receive the expanded refrigerant from the expansion device and evaporate the expanded refrigerant, wherein the refrigerant discharge tube (160) is in fluid communication with the condenser (20) and the oil discharge tube (180) is in fluid communication with the compressor (10).

## Patentansprüche

1. Ölabscheider (100) zum Abscheiden von Öl von einem Kältemittel, das von einem Kompressor einer Klimaanlage abgegeben wird, welcher Folgendes aufweist:
ein Gehäuse (120) mit einer zylindrischen Form und einem kreisförmigen Querschnitt in einer horizontalen Ebene,
ein Ansaugrohr (140), das in eine Seitenfläche des Gehäuses eingeführt und daran installiert ist, um ein mit Öl gemischtes Kältemittel in das Gehäuse einzuleiten,
ein Kältemittelauslassrohr (160), das vertikal in einen oberen Abschnitt des Gehäuses eingeführt und daran installiert ist, um das Kältemittel aus dem Gehäuse auszulassen, und
ein Ölauslassrohr (180), das mit einem unteren Abschnitt des Gehäuses verbunden ist, um das Öl aus dem Gehäuse auszulassen
**dadurch gekennzeichnet, dass** der Innendurchmesser des Gehäuses (120) im horizontalen Querschnitt 38,1 mm bis 46,8 mm beträgt,
wobei die Höhe des Gehäuses (120) 150 mm bis 180 mm beträgt,
wobei das Ansaugrohr (140) ein erstes Ende (142) zum Auslassen des Kältemittels in das Gehäuse (120) aufweist, wobei das erste Ende (142) vom Zentrum des Gehäuses (120) fort gebogen ist,
wobei die Längsachse des Ansaugrohrs (140) im horizontalen Querschnitt in einem vorgegebenen Abstand (S) vom Zentrum des Gehäuses (120) angeordnet ist und
wobei das erste Ende (142) unter einem Winkel von etwa 30° in Bezug auf die Längsachse (P2) des Ansaugrohrs (140) im horizontalen Querschnitt gebogen ist.

2. Ölabscheider nach Anspruch 1, wobei der Innendurchmesser des Gehäuses (120) im horizontalen Querschnitt etwa 46,8 mm beträgt.

3. Ölabscheider nach Anspruch 1 oder 2, wobei die Höhe des Gehäuses (120) etwa 150 mm beträgt.

4. Ölabscheider nach einem der vorhergehenden Ansprüche, wobei der Außendurchmesser des Ansaugrohrs (140) wenigstens etwa 12,7 mm beträgt.

5. Ölabscheider nach Anspruch 4, wobei der Außendurchmesser des Ansaugrohrs (140) 12,7 mm bis 15,88 mm beträgt.

6. Ölabscheider nach einem der vorhergehenden Ansprüche, wobei der Außendurchmesser des Kältemittelauslassrohrs (160) wenigstens etwa 12,7 mm beträgt.

7. Ölabscheider nach Anspruch 1, wobei der Innendurchmesser des Gehäuses im horizontalen Querschnitt etwa 46,8 mm beträgt und wobei der vorgegebene Abstand (S) zwischen der Längsachse des Ansaugrohrs (140) und dem Zentrum des Gehäuses (120) 10 mm bis 15 mm beträgt.

8. Ölabscheider nach Anspruch 7, wobei der vorgegebene Abstand (S) etwa 10,8 mm beträgt.

9. Ölabscheider nach einem der Ansprüche 1 bis 8, wobei ein Abstand (R1) vom Zentrum des Gehäuses (120) zum Zentrum des ersten Endes (142) des Ansaugrohrs (140) im horizontalen Querschnitt etwa 16,2 mm beträgt.

10. Ölabscheider nach Anspruch 9, wobei die Längsachse des gebogenen Teils des Ansaugrohrs (140), die durch das Zentrum des ersten Endes (142) verläuft, tangential zu einem mit dem Gehäuse (120) konzentrischen Kreis mit einem Radius von etwa 16,2 mm ist.

11. Klimaanlage, welche den Ölabscheider nach einem der vorhergehenden Ansprüche aufweist.

12. Klimaanlage nach Anspruch 11, welche ferner Folgendes aufweist:
einen Kompressor (10), der dafür ausgelegt ist, das Kältemittel zu komprimieren,
einen Kondensator (20), der dafür ausgelegt ist, das komprimierte Kältemittel vom Kompressor zu empfangen und zu kondensieren,
eine Expansionsvorrichtung (30), die dafür ausgelegt ist, das kondensierte Kältemittel vom Kondensator zu empfangen und sich ausdehnen zu lassen und
einen Verdampfer (40), der dafür ausgelegt ist, das expandierte Kältemittel von der Expansionsvorrichtung zu empfangen und zu verdampfen, wobei das Kältemittelauslassrohr (160) in Fluidkommunikation mit dem Kondensator (20) steht und das Ölauslassrohr (180) in Fluidkommunikation mit dem Kompressor (10) steht.

## Revendications

1. Séparateur d'huile (100) pour séparer une huile d'un réfrigérant évacué d'un compresseur d'un conditionneur d'air, comprenant :
un boîtier (120) présentant une forme cylindrique ayant une section transversale circulaire dans un plan horizontal ;
un tube d'aspiration (140) inséré à l'intérieur et installé sur une surface latérale du boîtier pour introduire un réfrigérant mélangé avec une huile à l'intérieur du boîtier ;
un tube d'évacuation de réfrigérant (160) inséré verticalement à l'intérieur et installé sur une partie supérieure du boîtier pour évacuer le réfrigérant du boîtier ; et
un tube d'évacuation d'huile (180) relié à une partie inférieure du boîtier pour évacuer l'huile du boîtier,
**caractérisé en ce qu'**un diamètre interne du boîtier (120) est de 38,1 mm à 46,8 mm dans la section transversale horizontale,
dans lequel une hauteur du boîtier (120) est de 150 mm à 180 mm,
dans lequel le tube d'aspiration (140) présente une première extrémité (142) pour évacuer le réfrigérant à l'intérieur du boîtier (120), la première extrémité (142) étant courbée de manière à s'éloigner d'un centre du boîtier (120),
dans lequel, dans la section transversale horizontale, un axe longitudinal du tube d'aspiration (140) se situe à une distance prédéterminée (S) du centre du boîtier (120), et
dans lequel la première extrémité (142) est courbée selon un angle d'environ 30 ° par rapport à l'axe longitudinal (P2) du tube d'aspiration (140) dans la section transversale horizontale.

2. Séparateur d'huile selon la revendication 1, dans lequel le diamètre interne du boîtier (120) est d'environ 46,8 mm dans la section transversale horizontale.

3. Séparateur d'huile selon la revendication 1 ou 2, dans lequel la hauteur du boîtier (120) est d'environ 150 mm.

4. Séparateur d'huile selon l'une quelconque des revendications précédentes, dans lequel un diamètre externe du tube d'aspiration (140) est au moins d'environ 12,7 mm.

5. Séparateur d'huile selon la revendication 4, dans lequel le diamètre externe du tube d'aspiration (140) est de 12,7 mm à 15,88 mm.

6. Séparateur d'huile selon l'une quelconque des revendications précédentes, dans lequel un diamètre externe du tube d'évacuation de réfrigérant (160) est au moins d'environ 12,7 mm.

7. Séparateur d'huile selon la revendication 1, dans lequel le diamètre interne du boîtier est d'environ 46,8 mm dans la section transversale horizontale, et dans lequel la distance prédéterminée (S) entre l'axe longitudinal du tube d'aspiration (140) et le centre du boîtier (120) est de 10 mm à 15 mm.

8. Séparateur d'huile selon la revendication 7, dans lequel la distance prédéterminée (S) est d'environ 10,8 mm.

9. Séparateur d'huile selon l'une quelconque des revendications 1 à 8, dans lequel, dans la section transversale horizontale, une distance (R1) du centre du boîtier (120) à un centre de la première extrémité (142) du tube d'aspiration (140) est d'environ 16,2 mm.

10. Séparateur d'huile selon la revendication 9, dans lequel un axe longitudinal de la partie courbée du tube d'aspiration (140), traversant le centre de la première extrémité (142), est tangentiel à un cercle concentrique par rapport au boîtier (120), présentant un rayon d'environ 16,2 mm.

11. Conditionneur d'air comprenant le séparateur d'huile selon l'une quelconque des revendications précédentes.

12. Conditionneur d'air selon la revendication 11, comprenant en outre :
un compresseur (10) configuré pour comprimer le réfrigérant ;
un condenseur (20) configuré pour recevoir le réfrigérant comprimé provenant du compresseur et condenser le réfrigérant comprimé ;
un dispositif de dilatation (30) configuré pour recevoir le réfrigérant condensé provenant du condenseur et dilater le réfrigérant condensé ; et
un évaporateur (40) configuré pour recevoir le réfrigérant dilaté provenant du dispositif de dilatation et évaporer le réfrigérant dilaté, dans lequel le tube d'évacuation de réfrigérant (160) est en communication fluidique avec le condenseur (20) et le tube d'évacuation d'huile (180) est en communication fluidique avec le compresseur (10).
